(19) **Europäisches Patentamt / European Patent Office / Office européen des brevets**

(11) **EP 1 829 279 B1**

(12) **FASCICULE DE BREVET EUROPEEN**

(45) Date de publication et mention
de la délivrance du brevet:
**09.02.2011 Bulletin 2011/06**

(21) Numéro de dépôt: **05850590.0**

(22) Date de dépôt: **22.12.2005**

(51) Int Cl.:
*H04L 9/14* *(2006.01)*    *H04L 9/30* *(2006.01)*

(86) Numéro de dépôt international:
**PCT/FR2005/003250**

(87) Numéro de publication internationale:
**WO 2006/070120 (06.07.2006 Gazette 2006/27)**

(54) **Procédé et dispositif de génération de clé pour un algorithme cryptographique**

Verfahren und Einrichtung zur Erzeugung eines Schlüssels für einen kryptographischen Algorithmus

Method and device for generating a key for a cryptographic algorithm

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.12.2004 FR 0413749**

(43) Date de publication de la demande:
**05.09.2007 Bulletin 2007/36**

(73) Titulaire: **MORPHO**
**75015 Paris (FR)**

(72) Inventeurs:
• **CHABANNE, Hervé**
**F-78700 Conflans Sainte Honorine (FR)**
• **DOTTAX, Emmanuelle**
**F-78200 Mantes la Jolie (FR)**

(74) Mandataire: **Cabinet Plasseraud**
**52, rue de la Victoire**
**75440 Paris Cedex 09 (FR)**

(56) Documents cités:
**EP-A- 1 465 366**    **US-A1- 2004 234 074**
**US-B1- 6 330 332**

• **BONEH D ET AL: "Efficient generation of shared RSA keys" JOURNAL OF THE ACM ACM USA, vol. 48, no. 4, juillet 2001 (2001-07), pages 702-722, XP002389550 ISSN: 0004-5411 cité dans la demande**

## Description

La présente invention est relative au domaine de la cryptographie et plus particulièrement à la protection de la confidentialité des clés utilisées par des algorithmes cryptographiques.

Les algorithmes cryptographiques permettent notamment de crypter des données et/ou de décrypter des données. On peut également utiliser de tels algorithmes pour de nombreuses autres applications. En effet, ils peuvent également servir à signer, ou encore à authentifier certaines informations. Ils peuvent être utiles aussi dans le domaine de l'horodatage.

De tels algorithmes comprennent généralement un enchaînement de plusieurs opérations, ou calculs, que l'on applique successivement sur une donnée à crypter afin d'obtenir une donnée cryptée ou encore sur une donnée cryptée afin d'obtenir une donnée décryptée.

Parmi ces algorithmes, certains sont fondés sur une utilisation de clés secrètes alors que d'autres se basent sur une utilisation mixte de clés publiques et de clés secrètes.

A titre d'exemple, les sections suivantes illustrent des applications de ces algorithmes au cryptage et décryptage des données.

Selon un principe général des algorithmes cryptographiques à clé publique dans de telles applications, les clés publiques sont accessibles à tous et quiconque peut envoyer des données cryptées à l'aide des clés publiques ; mais, seul le détenteur de clés secrètes correspondantes peut décrypter ces données.

La sécurité d'un algorithme cryptographique à clé publique repose sur le fait que la connaissance des clés publiques ne permet pas de retrouver les clés secrètes correspondantes et de ce fait elle ne permet pas de décrypter les données.

On connaît ainsi une méthode de cryptage à clé publique, nommée RSA, pour Rivest, Shamir, Adelman qui sont les noms de ses créateurs. Cette méthode est une des plus anciennes et des plus utilisées dans le domaine.

Selon cette méthode, on sélectionne quatre nombres notés p, q, e et d. Les nombres p et q sont deux nombres premiers distincts. On les génère de manière aléatoire.

Les nombres d et e vérifient l'équation suivante :

$$e*d = 1 \text{ modulo } (p-1)(q-1).$$

On peut alors utiliser un algorithme d'Euclide pour générer d à partir de e, p et q, selon des calculs bien connus de l'homme du métier.

Puis, on note n (module) le nombre résultant du produit des nombres p et q.

Ainsi, le couple de nombres n et e constitue la clé publique alors que le couple de nombres n et d constitue une clé privée.

Puis, pour un envoi d'une donnée correspondant à un nombre entier M compris entre 0 et n-1, on calcule le nombre codé C correspondant à envoyer selon l'équation suivante :

$$C = M^e \text{ modulo } n$$

Sur réception du message codé C, le détenteur de la clé privée calcule une valeur intermédiaire d'un nombre D :

$$D = C^d \text{ modulo } n$$

Puis, on récupère le message en clair original M suivant l'équation suivante :

$$D = M^{de} = M \text{ modulo } n$$

Ainsi, d'après ce qui précède, on note que de tels algorithmes à clé publique sont basés sur la génération de nombres premiers. Plus précisément, les algorithmes à clé publique comme le RSA peuvent requérir la génération de très grands nombres premiers. On peut ainsi être amené à générer des nombres premiers comprenant près de 500 chiffres.

Dans les algorithmes de type RSA, on note que le module n appartient à la clé publique et peut donc être connu de tous ; alors que le nombre d doit rester secret pour garantir la sécurité de l'algorithme. Or, le nombre d est obtenu à partir des nombres p et q. Par conséquent, il est important pour la sécurité de tels algorithmes que les nombres p et q restent secrets.

Généralement, pour un logiciel de cryptographie d'une carte électronique, la génération de ces clés est faite dans un milieu préservé de toute attaque, comme une usine par exemple pendant la fabrication du composant électronique dans lequel est exécuté l'algorithme cryptographique.

Par conséquent, dans de telles conditions, les nombres p et q peuvent être manipulés simplement sans aucun risque de subir des attaques qui viseraient à déterminer leur valeur et de ce fait à détruire la sécurité de l'algorithme. Ainsi, en général, ces différents procédés de génération de clés impliquent la manipulation de ces nombres p et q.

Dans de telles conditions, on peut utiliser différents procédés, bien connus de l'homme du métier, pour générer des nombres premiers.

Toutefois, pour certaines applications, on peut être amené à générer de telles clés dans des milieux extérieurs, dans lesquels des attaques qui visent à violer la confidentialité de clés utilisées de l'algorithme cryptographique sont possibles.

De nombreux types d'attaques sont aujourd'hui connus.

Ainsi, certaines attaques sont fondées sur des fuites d'information détectées lors de l'exécution de certaines étapes cryptographiques. Ces attaques sont généralement basées sur une corrélation entre les fuites d'informations détectés lors du traitement par l'algorithme cryptographique de la donnée et de la clé ou des clés (attaques par analyse de la consommation de courant, des émanations électromagnétiques du temps de calcul...).

Dans de telles conditions, il est fondamental de prendre des précautions adaptées pour préserver le secret des nombres p et q introduits précédemment.

On connaît une méthode de génération des nombres p et q permettant de préserver le secret de ces nombres. En effet, un article 'Efficient Generation of Shared RSA keys' écrit par Dan Boneh et Matthew Franklin propose de générer les nombres p et q de manière simultanée et confidentielle.

Un des objectifs de cette méthode est de générer des nombres premiers de manière partagée entre plusieurs participants. Ainsi, ces participants exécutent des calculs leur permettant de générer deux nombres premiers sans connaître ces nombres premiers, seul le produit de ces nombres étant connu par les participants.

Selon cette méthode, on sélectionne aléatoirement et simultanément les nombres p et q. Puis, on décide si les deux nombres ainsi sélectionnés sont des nombres premiers sur la base de leur produit. Afin de conserver le caractère secret des nombres p et q, on ne manipule pas directement ces nombres.

En effet, plus précisément, on sélectionne aléatoirement quatre nombres entiers, $p_a$, $p_b$, $q_a$ et $q_b$., le nombre p étant le résultat de la somme du nombre $p_a$ et du nombre $p_b$, et le nombre q étant le résultat de la somme du nombre $q_a$ et du nombre $q_b$.

On vérifie alors que les nombres p et q sont des nombres premiers sur la base de leur produit en manipulant les nombres $p_a$, $p_b$, $q_a$ et $q_b$.

Dans le cas où les nombres p et q ne sont pas premiers, on réitère la sélection aléatoire de deux autres nombres p et q jusqu'à ce que les nombres p et q sélectionnés soient détectés comme étant des nombres premiers.

Une telle solution peut être très lourde en calculs et réduire sensiblement la performance des procédés de génération de clés.

La présente invention vise à proposer une solution permettant de pallier ces inconvénients.

Un premier aspect de la présente invention propose un procédé de génération de clé pour un algorithme cryptographique dans un composant électronique, dans lequel on stocke en mémoire un nombre premier P.

Le procédé comprend une opération de génération d'au moins un nombre premier secret, cette opération étant réalisée selon les étapes successives suivantes :

/a/ sélectionner aléatoirement deux nombres entiers $p_1'$ et $p_2'$ dont la somme est égale à un nombre p' ;
/b/ décider si ledit nombre p' est un nombre premier, sur la base d'une combinaison du nombre premier stocké en mémoire P avec lesdits nombres $p_1'$ et $p_2'$;
/c/ si on décide que le nombre p' est un nombre premier, stocker les nombres $p_1'$ et $p_2'$ en mémoire dans le composant électronique; sinon réitérer les étapes /a/ et /b/.

Grâce à ces dispositions, on peut générer secrètement et efficacement un nombre premier p'.

En effet, le nombre p' ainsi généré n'est pas manipulé directement au cours des différentes étapes du procédé, on manipule seulement les nombres entiers $p_1'$ et $p_2'$. Par conséquent, on ne peut pas violer le secret du nombre p' par des attaques de l'algorithme au cours de l'étape de génération de ce nombre premier p'.

En outre, cette génération de nombre premier est efficace car elle permet de générer plusieurs nombres premiers successivement. Or, il est plus probable de sélectionner aléatoirement un nombre premier que de sélectionner aléatoirement plusieurs nombres premiers de manière simultanée, comme cela est proposé dans l'article 'Efficient Generation of Shared RSA keys'.

Un tel procédé selon l'invention peut avantageusement être appliqué à tout procédé de génération de clé pour un algorithme cryptographique déterminé dans un composant électronique, lorsqu'un tel algorithme requiert la génération d'un nombre premier secret ou même de plusieurs nombres premiers secrets.

L'étape /b/ peut être réalisée en mettant en oeuvre tout type de test de primalité permettant de décider de la primalité d'un nombre entier sur la base d'une combinaison de ce nombre entier avec un nombre premier.

En général, de tels tests de primalité sont des algorithmes probabilistes. Ils permettent de décider qu'un nombre est un nombre premier avec une très grande probabilité.

Dans un mode de réalisation de la présente invention, on détermine un premier nombre entier $p_1$ et un second nombre entier $p_2$ de telle sorte que le nombre premier P stocké en mémoire soit égal à la somme des nombres entiers $p_1$ et $p_2$ déterminés. L'étape /b/ est alors mis en oeuvre sur la base d'opérations réalisées sur les nombres $p_1$, $p_2$, $p_1'$ et $p_2'$.

Ainsi, au cours de la génération du nombre premier secret p', dans la phase de test de primalité du nombre p', de préférence, on ne manipule ni le nombre premier P, ni le nombre p', ce qui tend à rendre vaines les potentielles attaques contre le secret du nombre p' au cours de cette étape de génération.

On peut déterminer de façon aléatoire les premier et second nombres entiers $p_1$ et $p_2$.

On peut réaliser l'étape /b/ à l'aide d'un test de primalité basé sur une combinaison d'un test de type Solovay-Strassen et d'un test de type Miller Rabin. Ainsi, par exemple, le test de primalité peut être basé sur le test de primalité tel que décrit dans l'article 'Efficient Generation of Shared RSA keys' écrit par Dan Boneh et Matthew Franklin, à la section 3 'distributed primality test'. En effet, ce test de primalité est basé d'une part sur un test de primalité Solovay-Strassen et d'autre sur un test de primalité Rabin-Miller. Le test de primalité Solovay-Strassen est décrit dans un document de R. Solovay et V. Strassen "A fast monte carlo test for primality", 1977. Le test de primalité Rabin-Miller est décrit dans un document de M. Rabin, "Probabilistic algorithm for testing primality", 1980.

Dans un mode de réalisation de la présente invention, on accroît la performance d'un tel procédé, en incluant avant l'étape /b/, l'étape suivante :

/a1/ vérifier, sur la base d'opérations réalisées sur les nombres $p_1'$ et $p_2'$, que le nombre p' n'est pas divisible par un ou plusieurs nombres premiers déterminés ;

Dans ce cas, on réitère les étapes /a/ et /a1/ si le nombre p' est divisible par un des nombres premiers déterminés.

Cette étape /a1/ est d'autant plus intéressante lorsqu'on souhaite générer de grands nombres premiers. En effet, une telle étape permet d'éliminer certains nombres de manière assez simple, avant d'exécuter l'étape /b/ qui est plus lourde à réaliser.

Dans un mode de réalisation de la présente invention, l'étape /a1/ comprend les étapes suivantes, pour un nombre premier y strictement supérieur à 1 :

- sélectionner aléatoirement un premier nombre entier c parmi les nombres entiers compris entre 0 et y-1 et un second nombre entier d parmi les nombres entiers compris entre 1 et y-1 ;
- déterminer un nombre u selon l'équation suivante :

$$u = c + dp_1' \text{ modulo } y ;$$

- déterminer un nombre v selon l'équation suivante :

$$v = c - dp_2' \text{ modulo } y ;$$

- déterminer si p n'est pas divisible par y en fonction de la différence entre le nombre u et le nombre v.

Certains algorithmes cryptographiques requièrent la génération de plusieurs nombres premiers secrets. Dans ce cas, on peut aisément appliquer un procédé selon un mode de réalisation de l'invention, autant de fois qu'il est nécessaire de générer un nombre premier. On peut ainsi générer au moins deux nombres premiers, successivement, par réitération des étapes /a/ à /c/, pour construction d'une paire de clés asymétriques.

Un second aspect de la présente invention propose un composant électronique de génération de clé pour un algorithme cryptographique déterminé.

Le composant comprend :

- une unité de sélection adaptée pour sélectionner aléatoirement deux nombres entiers $p_1'$ et $p_2'$ dont la somme est un nombre p' ;
- une mémoire pour stocker un nombre premier P et pour stocker les nombres $p_1'$ et $p_2'$ lorsqu'on décide que la somme desdits nombres $p_1$ et $p_2'$ est un nombre premier ;
- une unité de décision adaptée pour décider si le nombre p' est un nombre premier sur la base d'une combinaison du nombre premier stocké en mémoire P avec lesdits nombres $p_1'$ et $p_2'$.

L'unité de sélection peut déterminer un premier nombre entier $p_1$ et un second nombre entier $p_2$ de telle sorte que le nombre premier P stocké en mémoire soit égal à la somme desdits nombres entiers $p_1$ et $p_2$ déterminés ; et l'unité de décision peut décider si le nombre p' est un nombre entier sur la base d'opérations réalisées sur les nombres $p_1$, $p_2$, $p_i'$ et $p_2'$.

Dans un mode de réalisation de la présente invention, l'unité de sélection détermine les premier et second nombres entiers $p_1$ et $p_2$ de manière aléatoire.

L'unité de décision met de préférence en oeuvre un test de primalité basé sur une combinaison d'un test de type Solovay-Strassen et d'un test de type Miller-Rabin, comme celui proposé dans l'article 'Efficient Generation of Shared RSA keys'.

Préférablement, l'unité de sélection opère un contrôle préalable, sur la base d'opérations réalisées sur les nombres $p_1'$ et $p_2'$, pour vérifier que le nombre p' n'est pas divisible par un ou plusieurs nombres premiers déterminés.

Dans ce cas, l'unité de sélection réitère la sélection aléatoire de deux nombres entiers $p_1'$ et $p_2'$ si p' est divisible par un nombre premier déterminé.

Dans un mode de réalisation de la présente invention, l'unité de sélection, pour opérer le contrôle préalable relativement à un nombre premier y strictement supérieur à 1, comprend en outre :

- des moyens agencés pour sélectionner aléatoirement un premier nombre c parmi les nombres entiers compris entre 0 et y-1 et un second nombre entier d parmi les nombres entiers compris entre 1 et y-1 ;
- des moyens agencés pour déterminer un nombre u selon l'équation suivante :

$$u = c + dp_1' \bmod y ;$$

- des moyens agencés pour déterminer un nombre v selon l'équation suivante :

$$v = c - dp_2' \bmod y ;$$

- des moyens agencés pour déterminer si p n'est pas divisible par y en fonction de la différence entre le nombre u et le nombre v.

D'autres aspects, buts et avantages de l'invention apparaîtront à la lecture de la description d'un de ses modes de réalisation.

L'invention sera également mieux comprise à l'aide des figures :

- la figure 1 illustre les principales étapes d'un procédé de génération de clé selon un mode de réalisation de la présente invention ;
- la figure 2 est un schéma d'un composant électronique selon un mode de réalisation de la présente invention.

Le procédé de génération de clé pour un algorithme cryptographique, dans un mode de réalisation de la présente invention, est destiné à être exécuté dans un composant électronique.

Au préalable, le composant électronique stocke en mémoire un nombre premier noté P.

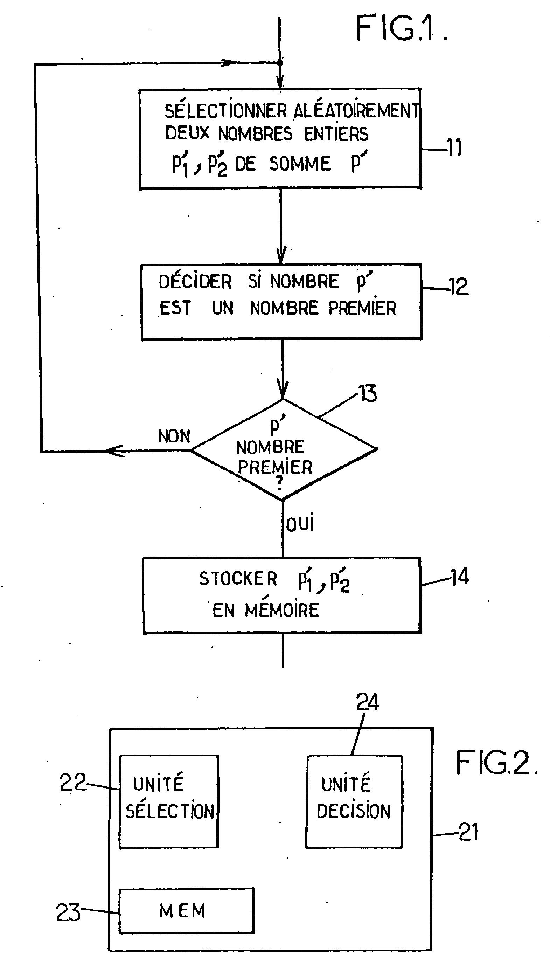

La figure 1 illustre les principales étapes du procédé selon un mode de réalisation de l'invention.

A l'étape 11, on sélectionne aléatoirement deux nombres entiers notés $p_1'$ et $p_2'$. Puis, à l'étape 12, on décide si la somme, notée p', de ces deux nombres sélectionnés est un nombre premier. Cette étape est réalisée de façon à ce que le secret du nombre p' soit préservé. Ainsi, de préférence, dans cette étape, on veille à ne pas manipuler le nombre p' en tant que tel. La décision de la primalité du nombre p' est réalisée par des opérations effectuées sur les nombres $p_1'$ et $p_2'$.

Puis, à l'étape 13 si le nombre p' est détecté comme n'étant pas un nombre premier, on réitère les étapes précédentes 11 et 12.

Par contre, s'il est détecté comme étant un nombre premier, on stocke alors en mémoire les nombres $p_1'$ et $p_2'$.

On peut ainsi réitérer un tel procédé à chaque fois que la génération d'un nombre premier secret est requise.

A l'étape 12, on peut mettre en oeuvre n'importe quel test de primalité qui permet de décider si un nombre est une combinaison de deux nombres premiers, dès lors que ce test ne comprend pas d'opérations qui pourraient mettre en péril le caractère secret de l'un des deux nombres du produit. L'homme du métier a aisément à sa disposition de tels tests de primalité.

Avantageusement, ces tests de primalité peuvent permettre de décider, sur la base du produit n du nombre premier P et du nombre p' résultant de la somme des nombres aléatoirement sélectionnés $p_1$ et $p_2'$, si le nombre p' est un nombre premier. Ce test comprend donc des opérations sur les nombres $p_1'$ et $p_2'$ mais pas d'opérations réalisées directement sur le nombre p'.

Ainsi, par exemple, le test de primalité peut être basé sur une combinaison d'un test de type Solovay-Strassen et d'un test de type Miller-Rabin, comme celui proposé dans l'article 'Efficient Generation of Shared RSA keys'.

Dans ce cas, on décompose P sous la forme de deux nombres notés $p_1$ et $p_2$. Cette décomposition peut être réalisée de manière aléatoire ou non aléatoire.

Ce test permet de décider si un nombre m est le produit de deux nombres premiers P et p', où m vérifie l'équation :

$$m = (p_1 + p_2) * (p_1' + p_2')$$

où
$P = p_1 + p_2$
et
$p' = p_1' + p_2'$.

Ainsi, sans avoir à manipuler directement les nombres P et p', on est en mesure de décider si ces nombres P et p' sont des nombres premiers.

On note que, dans une telle application le nombre m peut être manipulé sans risque puisqu'il n'est pas secret.

Comme cela est décrit en détail dans l'article "Efficient Generation of Shared RSA keys', on suppose, dans ce test, que les différents nombres vérifient les caractéristiques suivantes :

$p_1 = 3 \bmod 4$
et
$p_1' = 3 \bmod 4$
puis
$p_2 = 0 \bmod 4$
et
$p_2' = 0 \bmod 4$

Afin de ne pas permettre une quelconque attaque quant au secret sur le nombre p', au cours de cette étape, les opérations sont avantageusement réalisées sur les nombres $p_1$, $p_2$, $p_1'$ et $p_2'$.

En premier lieu, on sélectionne de manière aléatoire un nombre a parmi les nombres entiers compris entre 1 et m-1.

On calcule ensuite le symbole de Jacobi relativement au nombre a ainsi sélectionné, noté $\left(\dfrac{a}{m}\right)$. .

Puis, si le symbole de Jacobi ainsi calculé est différent de 1, on réitère l'étape de sélection aléatoire du nombre a.

Si le symbole de Jacobi est égal à 1, on poursuit avec l'étape suivante.

On effectue alors un premier calcul intermédiaire sur les nombres m, $p_1$ et $p_2$' et on obtient un nombre u vérifiant l'équation suivante :

$$u = a^{\frac{m-p_1-p_1'+1}{4}} \bmod m$$

Ensuite, on effectue un second calcul intermédiaire sur les nombres m, $p_1$ et $p_2$, et on obtient un nombre v vérifiant l'équation suivante :

$$v = a^{\frac{p_2+p_2'}{4}} \bmod m$$

On teste alors si l'équation suivante est vérifiée :

$$u = +/- v \bmod m$$

Si cette dernière équation est vérifiée, on en déduit que m est le produit des deux nombres entiers P et p' avec une certaine probabilité.

Dans un mode de réalisation de la présente invention, P est un nombre premier préalablement stocké dans une mémoire du composant électronique. Par conséquent, en appliquant ce type de test, on est en mesure de décider si le nombre p' est un nombre premier sans avoir effectué d'opération directement sur le nombre p'.

Dans un mode de réalisation de la présente invention, afin d'augmenter la probabilité de réaliser l'étape 12 sur des nombres $p_1$' et $p_2$' pour lesquels la somme est un nombre premier, on peut réaliser, avant l'étape 12, une étape qui permette d'éliminer au préalable, de façon simple et efficace, certains nombres.

On peut ainsi considérer un ensemble de nombres premiers. Puis, avant l'étape 12, on souhaite déterminer si le nombre p' est divisible par un nombre premier noté y. A cet effet, on sélectionne aléatoirement un nombre entier c parmi les nombres entiers compris entre 0 et y-1 et un nombre entier d parmi les nombres entiers compris entre 1 et y-1.

Puis, on effectue les deux calculs intermédiaires suivants :

$$u = c + dp_1' \bmod y$$

$$v = c - dp_2' \bmod y$$

On peut alors tester si l'équation suivante est vérifiée :

$$u - v = 0 \bmod y$$

Lorsque cette dernière équation est vérifiée, on en déduit que le nombre p' est divisible par y.

La figure 2 est un schéma représentant un composant électronique selon un mode de réalisation de la présente Invention.

Un tel composant 21 comprend une unité de sélection 22 adaptée pour sélectionner aléatoirement deux nombres entiers $p_1$' et $p_2$' dont la somme est un nombre p'.

Il comprend en outre une mémoire 23 pour stocker un nombre premier P et pour stocker les nombres $p_1$' et $p_2$' lorsqu'on décide que la somme de ces nombres $p_1$' et $p_2$' est un nombre premier.

Il comprend également une unité de décision adaptée pour décider si le nombre p' est un nombre premier sur la base d'une combinaison du nombre premier stocké en mémoire P avec les nombres $p_1$' et $p_2$'.

On obtient ainsi un procédé de génération de clé adapté pour générer de manière efficace et secrète un nombre premier ou plusieurs nombres premiers de manière successive.

## Revendications

1. Procédé de génération de clé pour un algorithme cryptographique dans un composant électronique (21) ;
   suivant lequel on stocke en mémoire dans ledit composant électronique un nombre premier P ;
   ledit procédé comprenant une opération de génération d'au moins un nombre premier secret, ladite opération étant réalisée selon les étapes successives suivantes :

   /a/ sélectionner (11) aléatoirement deux nombres entiers $p_1$' et $p_2$' dont la somme est égale à un nombre p' ;
   /b/ décider (12) si ledit nombre p' est un nombre premier, sur la base d'une combinaison du nombre premier stocké en mémoire P avec lesdits nombres $p_1$' et $p_2$';
   /c/ si on décide que le nombre p' est un nombre premier, stocker (14) les nombres $p_1$' et $p_2$' en mémoire dans le composant électronique; sinon réitérer les étapes /a/ et /b/.

2. Procédé selon la revendication 1, suivant lequel on détermine un premier nombre entier $p_1$ et un second nombre entier $p_2$ de telle sorte que le nombre premier P stocké en mémoire soit égal à la somme desdits nombres entiers $p_1$ et $p_2$ déterminés ; et suivant lequel l'étape /b/ est mis en oeuvre sur la base d'opérations réalisées sur les nombres $p_1$, $p_2$, $p_1'$ et $p_2''$

3. Procédé selon l'une quelconque des revendications précédentes, suivant lequel les premier et second nombres entiers $p_1$ et $p_2$ sont déterminés de manière aléatoire.

4. Procédé selon l'une quelconques des revendications précédentes, suivant lequel on réalise l'étape /b/ à l'aide d'un test de primalité basé sur une combinaison d'un test de type Solovay-Strassen et d'un test de type Miller-Rabin.

5. Procédé selon l'une quelconque des revendications précédentes, comprenant en outre, avant l'étape /b/, l'étape suivante :

   /a1/ vérifier, sur la base d'opérations réalisées sur les nombres $p_1'$ et $p_2'$, que le nombre p' n'est pas divisible par un ou plusieurs nombres premiers déterminés ;

   suivant lequel on réitère les étapes /a/ et /a1/ si le nombre p' est divisible par un desdits nombres premiers déterminés.

6. Procédé selon la revendication 5, suivant lequel l'étape /a1/ comprend les étapes suivantes, pour un nombre premier déterminé y strictement supérieur à 1 :

   - sélectionner aléatoirement un premier nombre c et un second nombre d parmi les nombres entiers compris entre 1 et y-1 ;
   - déterminer un nombre u selon l'équation suivante :

   $$u = c + dp_1' \text{ modulo } y ;$$

   - déterminer un nombre v selon l'équation suivante :

   $$v = c - dp_2' \text{ modulo } y ;$$

   - déterminer si p n'est pas divisible par y en fonction de la différence entre le nombre u et le nombre v.

7. Procédé selon l'une quelconque des revendications précédentes, suivant lequel on génère au moins deux nombres premiers par réitération des étapes /a/ à /c/ pour construction d'une paire de clés asymétriques.

8. Procédé selon l'une quelconque des revendications précédentes, suivant lequel l'algorithme de cryptographie est un algorithme de type RSA.

9. Composant électronique (21) de génération de clé pour un algorithme cryptographique déterminé ; ledit composant comprenant :

   - une unité de sélection (22) adaptée pour sélectionner aléatoirement deux nombres entiers $p_1'$ et $p_2'$ dont la somme est un nombre p';
   - une mémoire (23) adaptée pour stocker un nombre premier P et pour stocker les nombres $p_1'$ et $p_2'$ lorsqu'on décide que la somme desdits nombres $p_1'$ et $p_2'$ est un nombre premier ;
   - une unité de décision (24) adaptée pour décider si le nombre p' est un nombre premier sur la base d'une combinaison du nombre premier stocké en mémoire P avec lesdits nombres $p_1'$ et $p_2'$.

10. Composant électronique selon la revendication 9, dans lequel l'unité de sélection (22) est adaptée pour déterminer un premier nombre entier $p_1$ et un second nombre entier $p_2$ de telle sorte que le nombre premier P stocké en mémoire (23) soit égal à la somme desdits nombres entiers $p_1$ et $p_2$ déterminés ; et dans lequel l'unité de décision (23) est adaptée pour décider si le nombre p' est un nombré premier sur la base d'opérations réalisées sur les nombres $p_1$, $p_2$, $p_1'$ et $p_2'$.

11. Composant électronique selon la revendication 10, dans lequel l'unité de sélection (22) est adaptée pour déterminer les premier et second nombres entiers $p_1$ et $p_2$ de manière aléatoire.

12. Composant électronique selon l'une quelconque des revendications 9 à 11, dans lequel l'unité de décision (23) est adaptée pour mettre en oeuvre un test de primalité basé sur une combinaison d'un test de type Solovay-Strassen et d'un test de type Miller-Rabin.

13. Composant électronique selon l'une quelconque des revendications 9 à 12, dans lequel l'unité de sélection (22) est adaptée pour opérer un contrôle préalable, sur la base d'opérations réalisées sur les nombres $p_1'$ et $p_2'$, pour vérifier que le nombre p' n'est pas divisible par un ou plusieurs nombre premiers déterminés; et dans lequel l'unité de sélection (22) est adaptée pour réitèrer la sélection aléatoire de deux nombres entiers $p_1'$ et $p_2'$ si p' est divisible par un nombre premier déterminé.

**14.** Composant électronique selon la revendication 13, dans lequel l'unité de sélection (22), pour opérer le contrôle préalable relativement à un nombre premier y strictement supérieur à 1, comprend en outre :

- des moyens agencés pour sélectionner aléatoirement un premier nombre c et un second nombre d parmi les nombres entiers compris entre 1 et y-1 ;
- des moyens agencés pour déterminer un nombre u selon l'équation suivante :

$$u = c + dp_1' \text{ modulo } y ;$$

- des moyens agencés pour déterminer un nombre v selon l'équation suivante :

$$v = c - dp_2' \text{ modulo } y ;$$

- des moyens agencés pour déterminer si p n'est pas divisible par y en fonction de la différence entre le nombre u et le nombre v.

**15.** Composant électronique selon l'une quelconque des revendications 9 à 14, qui comprend des moyens pour générer successivement une pluralité de nombres premiers p'.

**16.** Composant électronique selon l'une quelconque des revendications 9 à 15, dans lequel l'algorithme cryptographique est un algorithme de type RSA.

**Claims**

**1.** A method of generating a key for a cryptographic algorithm in an electronic component (21); according to which a prime number P is stored in memory in said electronic component; said method comprising an operation of generating at least one secret prime number, said operation being carried out according to the following successive steps:

/a/ randomly selecting (11) two integers $p_1'$ and $p_2'$ whose sum is equal to a number p'; /b/ deciding (12) whether said number p' is a prime number, on the basis of a combining of the prime number stored in memory P with said numbers $p_1'$ and $p_2'$; /c/ if it is decided that the number p' is a prime number, storing (14) the numbers $p_1'$ and $p_2'$ in memory in the electronic component; otherwise repeating steps /a/ and /b/.

**2.** The method as claimed in claim 1, according to which a first integer $p_1$ and a second integer $p_2$ are determined so that the prime number P stored in memory is equal to the sum of said determined integers $p_1$ and $p_2$; and according to which step /b/ is implemented on the basis of operations carried out on the numbers $p_1$, $p_2$, $p_1'$ and $p_2'$ .

**3.** The method as claimed in any one of the preceding claims, according to which the first and second integers $p_1$ and $p_2$ are determined in a random manner.

**4.** The method as claimed in any one of the preceding claims, according to which step /b/ is carried out with the aid of a primality test based on combining a test of Solovay-Strassen type and a test of Miller-Rabin type.

**5.** The method as claimed in any one of the preceding claims, furthermore comprising, before step /b/, the following step:

/a1/ verifying, on the basis of operations carried out on the numbers $p_1'$ and $p_2'$, that the number p' is not divisible by one or more determined prime numbers; according to which steps /a/ and /a1/ are repeated if the number p' is divisible by one of said determined prime numbers.

**6.** The method as claimed in claim 5, according to which step /a1/ comprises the following steps, for a determined prime number y strictly greater than 1:

- randomly selecting a first number c and a second number d from among the integers ranging between 1 and y-1;
- determining a number u according to the following equation:

$$u = c + dp_1' \text{ modulo } y;$$

- determining a number v according to the following equation:

$$v = c - dp_2' \text{ modulo } y;$$

- determining whether p is not divisible by y as a function of the difference between the number u and the number v.

**7.** The method as claimed in any one of the preceding claims, according to which at least two prime numbers are generated by repeating steps /a/ to /c/ for construction of a pair of asymmetric keys.

8. The method as claimed in any one of the preceding claims, according to which the cryptography algorithm is an algorithm of RSA type.

9. An electronic component (21) for generating a key for a determined cryptographic algorithm; said component comprising:

- a selection unit (22) suitable for randomly selecting two integers $p_1'$ and $p_2'$ whose sum is a number p';
- a memory (23) adapted for storing a prime number P and for storing the numbers $p_1'$ and $p_2'$ when it is decided that the sum of said numbers $p_1'$ and $p_2'$ is a prime number;
- a decision unit (24) suitable for deciding whether the number p' is a prime number on the basis of a combining of the prime number stored in memory P with said numbers $p_1'$ and $p_2'$ .

10. The electronic component as claimed in claim 9, in which the selection unit (22) is arranged to determine a first integer $p_1$ and a second integer $p_2$ so that the prime number P stored in memory (23) is equal to the sum of said determined integers $p_1$ and $p_2$; and in which the decision unit (23) is arranged to decide whether the number p' is prime on the basis of operations carried out on the numbers $p_1$, $p_2$, $p_1'$ and $p_2'$.

11. The electronic component as claimed in claim 10, in which the selection unit (22) is arranged to determine the first and second integers $p_1$ and $p_2$ in a random manner.

12. The electronic component as claimed in any one of claims 9 to 11, in which the decision unit (23) is arranged to implement a primality test based on combining a test of Solovay-Strassen type and a test of Miller-Rabin type.

13. The electronic component as claimed in any one of claims 9 to 12, in which the selection unit (22) is arranged to conduct a prior check, on the basis of operations carried out on the numbers $p_1'$ and $p_2'$, in order to verify that the number p' is not divisible by one or more determined prime numbers; and in which the selection unit (22) is arranged to repeat the random selection of two integers $p_1'$ and $p_2'$ if p' is divisible by a determined prime number.

14. The electronic component as claimed in claim 13, in which the selection unit (22), in order to conduct the prior check in relation to a prime number y strictly greater than 1, furthermore comprises:

- means designed to randomly select a first number c and a second number d from among the integers ranging between 1 and y-1;
- means designed to determine a number u according to the following equation:

$$u=c+dp_1' \bmod y;$$

- means designed to determine a number v according to the following equation:

$$v=c-dp_2' \bmod y;$$

- means designed to determine whether p is not divisible by y as a function of the difference between the number u and the number v.

15. The electronic component as claimed in any one of claims 9 to 14, arranged to successively generate a plurality of prime numbers p'.

16. The electronic component as claimed in any one of claims 9 to 15, in which the cryptographic algorithm is an algorithm of RSA type.

**Patentansprüche**

1. Verfahren zur Erzeugung eines Schlüssels für einen Kryptographie-Algorithmus in einer elektronischen Komponente (21); demzufolge man in der genannten, elektronischen Komponente im Speicher eine Primzahl P speichert; wobei das genannte Verfahren einen Vorgang der Erzeugung von mindestens einer geheimen Primzahl enthält, wobei der genannte Vorgang gemäß den folgenden, sukzessiven Schritten ausgeführt wird:

/a/ zufälliges Auswählen (11) zweier ganzer Zahlen $p_1'$ und $p_2'$, deren Summe gleich einer Zahl p' ist; /b/ Befinden (12) darüber, ob die genannte Zahl p' eine Primzahl ist, anhand einer Kombination der im Speicher gespeicherten Primzahl P mit den genannten Zahlen $p_1'$ und $p_2'$; /c/ wenn man darüber befindet, dass die Zahl p' eine Primzahl ist, Speichern (14) der Zahlen $p_1'$ und $p_2'$ im Speicher in der elektronischen Komponente; ansonsten Wiederholen der Schritte /a/ und /b/.

2. Verfahren nach Anspruch 1, demzufolge man eine

erste, ganze Zahl $p_1$ und eine zweite, ganze Zahl $p_2$ so bestimmt, dass die im Speicher gespeicherte Primzahl P gleich der Summe der genannten, bestimmten ganzen Zahlen $p_1$ und $p_2$ ist; und demzufolge der Schritt /b/ anhand von Operationen, die mit den Zahlen $p_1$, $p_2$, $p_1$' und $p_2$' durchgeführt werden, umgesetzt wird.

**3.** Verfahren nach einem beliebigen der vorstehenden Ansprüche, demzufolge die erste und zweite, ganze Zahl $p_1$ und $p_2$ in zufälliger Weise bestimmt werden.

**4.** Verfahren nach einem beliebigen der vorstehenden Ansprüche, demzufolge man den Schritt /b/ mit Hilfe eines Prim-Tests realisiert, der auf einer Kombination eines Tests der Art Solovay-Straßen und eines Tests der Art Miller-Rabin basiert.

**5.** Verfahren nach einem beliebigen der vorstehenden Ansprüche, das ferner, vor dem Schritt /b/, folgenden Schritt enthält:

/a1/ Überprüfen, anhand von mit den Zahlen $p_1$' und $p_2$' ausgeführter Operationen, ob die Zahl p' nicht durch eine oder mehrere, bestimmte Primzahlen teilbar ist;

demzufolge man die Schritte /a/ und /a1/ wiederholt, wenn die Zahl p' durch eine der genannten, bestimmten Primzahlen teilbar ist.

**6.** Verfahren nach Anspruch 5, demzufolge der Schritt /a1/ für eine bestimmte Primzahl y, die strikt größer ist als 1, die folgenden Schritte enthält:

- zufälliges Auswählen einer ersten Zahl c und einer zweiten Zahl d aus den ganzen Zahlen enthalten zwischen 1 und y-1;
- Bestimmen einer Zahl u nach der folgenden Gleichung:

$$u = c + dp_1' \text{ modulo } y$$

- Bestimmen einer Zahl v nach der folgenden Gleichung:

$$v = c - dp_2' \text{ modulo } y$$

- Bestimmen, in Abhängigkeit der Differenz zwischen der Zahl u und der Zahl v, ob p nicht durch y teilbar ist.

**7.** Verfahren nach einem beliebigen der vorstehenden Ansprüche, demzufolge man mindestens zwei Primzahlen durch Wiederholung der Schritte /a/ bis /c/ erzeugt, um ein Paar asymmetrischer Schlüssel zu konstruieren.

**8.** Verfahren nach einem beliebigen der vorstehenden Ansprüche, demzufolge der Kryptographie-Algorithmus ein Algorithmus der Art RSA ist.

**9.** Elektronische Komponente (21) zur Schlüssel-Erzeugung für einen bestimmten Kryptographie-Algorithmus;
wobei die Komponente enthält:

- eine Auswahl-Einheit (22), ausgelegt um zufällig zwei ganze Zahlen $p_1$' und $p_2$' auszuwählen, deren Summe eine Zahl p' ist;
- einen Speicher (23), ausgelegt zum Speichern einer Primzahl P und zum Speichern der Zahlen $p_1$' und $p_2$', wenn man befindet, dass die Summe der genannten Zahlen $p_1$' und $p_2$' eine Primzahl ist;
- eine Entscheidungs-Einheit (24), ausgelegt um darüber zu befinden, ob die Zahl p' eine Primzahl ist, anhand einer Kombination der im Speicher gespeicherten Primzahl P mit den genannten Zahlen $p_1$' und $p_2$'.

**10.** Elektronische Komponente nach Anspruch 9, in der die Auswahl-Einheit (22) ausgelegt ist zum Bestimmen einer ersten, ganzen Zahl $p_1$ und einer zweiten, ganzen Zahl $p_2$, derart, dass die im Speicher (23) gespeicherte Primzahl P gleich der Summe der genannten, bestimmten ganzen Zahlen $p_1$ und $p_2$ ist; und
in der die Entscheidungs-Einheit (23) ausgelegt ist zum Befinden darüber, ob die Zahl p' eine Primzahl ist, anhand von mit den Zahlen $p_1$, $p_2$, $p_1$' und $p_2$' ausgeführter Operationen.

**11.** Elektronische Komponente nach Anspruch 10, in der die Auswahl-Einheit (22) darauf ausgelegt ist, die erste und zweite, ganze Zahl $p_1$ und $p_2$ in zufälliger Weise zu bestimmen.

**12.** Elektronische Komponente nach einem beliebigen der Ansprüche 9 bis 11, in der die Entscheidungs-Einheit (23) darauf ausgelegt ist, einen Prim-Test auszuführen anhand einer Kombination eines Tests der Art Solovay-Straßen und eines Tests der Art Miller-Rabin.

**13.** Elektronische Komponente nach einem beliebigen der Ansprüche 9 bis 12, in der die Auswahl-Einheit (22) darauf ausgelegt ist, eine Vorkontrolle auszuführen, anhand von mit den Zahlen $p_1$' und $p_2$' ausgeführter Operationen, um zu überprüfen, ob die Zahl p' nicht durch eine oder mehrere, bestimmte Primzahlen teilbar ist; und
in der die Auswahl-Einheit (22) darauf ausgelegt ist, die zufällige Auswahl der beiden ganzen Zahlen $p_1'$ und $p_2'$ zu wiederholen, wenn p' durch eine bestimmte Primzahl teilbar ist.

14. Elektronische Komponente nach Anspruch 13, in der die Auswahl-Einheit (22), um die Vorkontrolle auszuführen bezüglich einer Primzahl y, die strikt größer ist als 1, ferner enthält:

> - Mittel, die eingerichtet sind, um zufällig eine erste Zahl c und eine zweite Zahl d aus den ganzen Zahlen, die zwischen 1 und y-1 enthalten sind, auszuwählen;
> - Mittel, die eingerichtet sind, um eine Zahl u gemäß folgender Gleichung zu bestimmen:

$$u = c + dp_1' \text{ modulo } y$$

> - Mittel, die eingerichtet sind, um eine Zahl v gemäß folgender Gleichung zu bestimmen:

$$v = c - dp_2' \text{ modulo } y$$

> - Mittel, die eingerichtet sind, um in Abhängigkeit der Differenz der Zahl u und der Zahl v darüber zu befinden, ob p nicht durch y teilbar ist.

15. Elektronische Komponente nach einem beliebigen der Ansprüche 9 bis 14, die Mittel enthält, um sukzessiv eine Mehrzahl von Primzahlen p' zu erzeugen.

16. Elektronische Komponente nach einem beliebigen der Ansprüche 9 bis 15, in der der Kryptographie-Algorithmus ein Algorithmus der Art RSA ist.

# FIG.1.

SÉLECTIONNER ALÉATOIREMENT DEUX NOMBRES ENTIERS $P'_1, P'_2$ DE SOMME $p'$ — 11

DÉCIDER SI NOMBRE $p'$ EST UN NOMBRE PREMIER — 12

NON ← $p'$ NOMBRE PREMIER ? — 13

OUI

STOCKER $P'_1, P'_2$ EN MÉMOIRE — 14

# FIG.2.

24

22 — UNITÉ SÉLECTION

UNITÉ DECISION — 24

21

23 — MEM

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. Solovay ; V. Strassen.** *A fast monte carlo test for primality,* 1977

- **M. Rabin.** *Probabilistic algorithm for testing primality,* 1970